# EUROPEAN PATENT APPLICATION

(11) **EP 0 973 131 A1**
(43) Date of publication of application: **19.01.2000**
(21) Application number: 99420154.9
(22) Date of filing: 06.07.1999
(51) Int. Cl.: G06T 11/00

(54) **Process and device for transforming digital images**

(30) Priority: 15.07.1998 FR 9809179
(71) Applicant: EASTMAN KODAK COMPANY, Rochester, New York 14650-2201 (US)
(72) Inventor: Vachette, Thierry, 71102 Chalon sur Saone Cédex (FR); Touchard, Nicolas Patrice Bernard, 71102 Chalon sur Saone Cédex (FR)
(74) Representative: Buff, Michel

(57) **Abstract**

The invention relates to the transformation of electronic images.

The electronic image transformation process, in which a computer 20 a) displays an image on a display device 10, b) comprises image transformation algorithms and c) is linked to a control element 30 that supplies a digital signal, is characterized in that the variations of the digital value of the control element output signal are used to gradually transform at least a significant part of the image according to at least one algorithm set by these digital values.

Application to image distortion.

## Description

The present invention relates to image processing, and more particularly to the transformation of an image obtained electronically, either analog or digital.

It is common place in electronic imaging to want to transform part of an image, either by modifying the colors, by modifying the shapes and outlines of the objects contained in the image or in any other way. Software programs for processing digital images can be found on the market in which, by means of a set interface, the user selects a type of transformation and then determines the degree of transformation to be applied to the image. Such an operation requires knowledge of the functioning of the possible transformations.

The principle of entertaining people with distorted images has been used for a long time and implemented with distorting mirrors. This type of implementation requires large sized mirrors, with each mirror only giving one type of distortion.

The purpose of the present invention is to provide a user with a device and a process that is easy to use, interactive and intuitive in a way that avoids tedious learning.

Another purpose is to obtain a device allowing various distortions of displayed images to be obtained without having to act on the hardware or the software contained in the device according to the invention.

The purpose of the invention is obtained by means of an image transformation process using a computer that displays an image on a display device, which comprises the image transformation algorithms and is linked to a control element that supplies a digital signal. This process is characterized in that the variations of the digital value of the control element output signal are used to gradually transform at least a significant part of the image according to at least one algorithm set by these digital values.

The invention also provides an image transformation device. The device comprises: a) a means of displaying images, b) a computer supplied with several image transformation algorithms, and c) a control element for sending digital signals to the computer. It is characterized in that it further comprises a means that is sensitive to the digital signals supplied by the control element and, according to the digital value of the signal supplied and its variations, that gradually transforms at least a significant part of the image according to at least one algorithm determined by the digital values of the signal sent by the control element.

Other characteristics and advantages of the invention will appear on reading the description below with reference to the annexed drawings that are given as examples.

Figure 1 represents a device that embodies the process according to the invention,

Figure 2 diagrammatically represents a sample of the images displayed when using the process according to the invention wherein a single transformation is applied.

Figure 3 diagrammatically represents a sample of the images displayed when using the process according to the invention wherein two simultaneous transformations are applied.

Figure 4 diagrammatically represents a sample of the images displayed when using the process according to the invention wherein three distinct and simultaneous transformations are applied.

Figure 5 diagrammatically represents a sample of the images displayed when using the process according to the invention wherein only one part of the image is transformed.

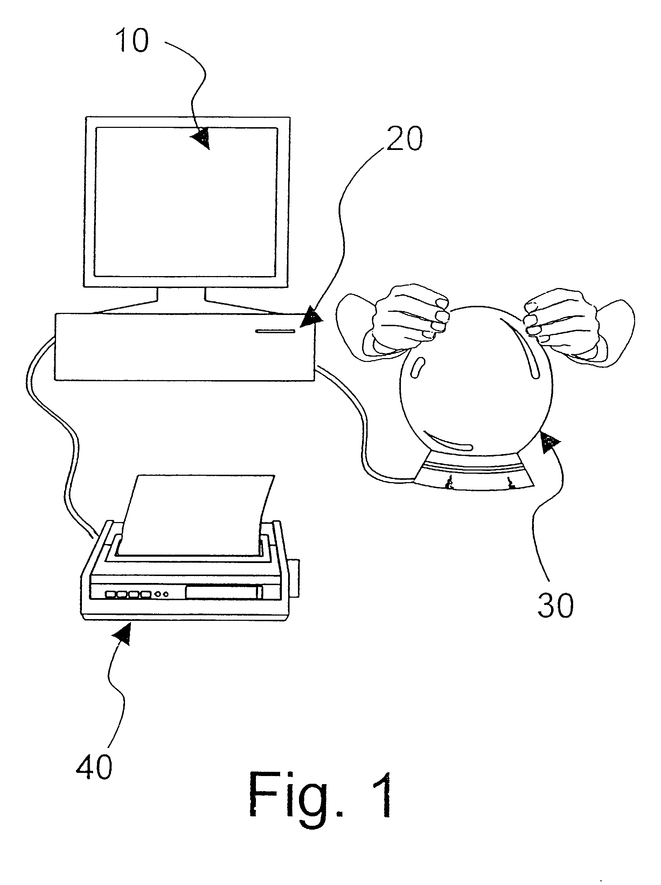

As can be seen in Figure 1 the device serving to apply the process according to the invention comprises an image display means 10 that, as shown, can take the form of a display screen. Obviously a projector or any other known device can also be used enabling the video signals to be projected. Further, the device comprises a computer 20, for example a PC type computer console or any other type, which enables the image coding signals to be sent to the display device 10. The computer 20 is arranged so as to be able to receive video signals representative of the image to be displayed, or digital signals representative of an image, either previously recorded in a digital image file, or coming from a suitable device, such as a camera, providing real time digital signals representative of an image or a scene. The computer is linked to a control element 30 that enables digital control signals to be supplied to the computer. This control element can take the form of any type of control element such as for instance: a mouse, a games "joystick" or the interactive interface described in French Patent Application FR 9800871 filed on 22 January 1998.

The computer 20 further comprises, recorded in its memory, several image transformation algorithms. It is well known that each image transformation algorithm, in response to a control signal supplied by the control element, modifies the signals of the image to be displayed to distort the image according to the algorithm.

According to the invention, the software (or the hardware) contained in the computer is modified so as to define a means sensitive to the digital signals provided by the control element 30 in order to select an image transformation algorithm according to the digital values of the signal coming from the control element. Further, the transformation rate applied by the algorithm selected depends on the modifications of the signal coming from the control element.

More explicitly, assuming that the control element provides a single signal varying between +5 volts and -5 volts and that the signal is digitized to 12 bits, then the values of the signal coming from the control element vary between 0 and 4095. Also assuming that the computer has two image transformation algorithms A and B, then, for example, algorithm A is associated with the signal values between 0 and 2047 coming from the control element and algorithm B is associated with the signal values between 2048 and 4095 coming from the control element. Obviously different operational ranges of amplitude can be used, for example with algorithm A corresponding to signal values between 0 and 2000 and algorithm B to signal values between 2001 and 4095.

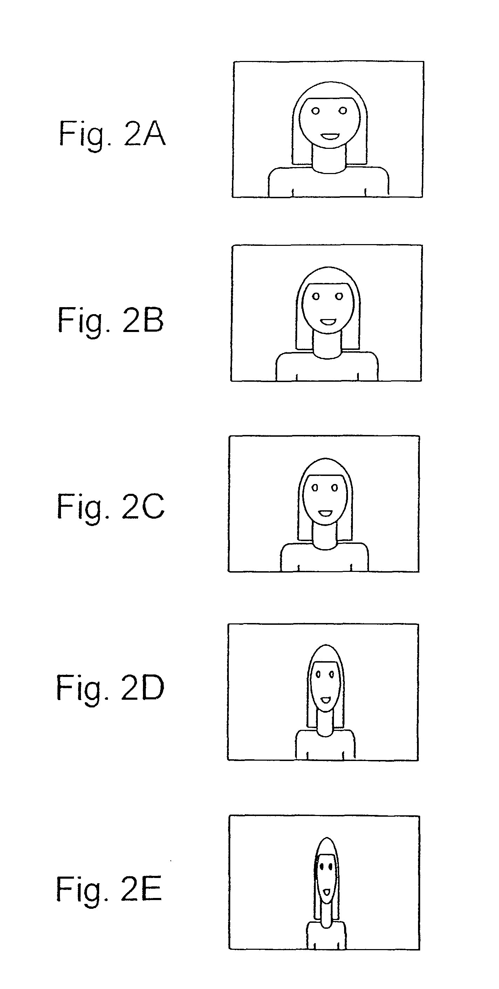

Figures 2A to 2E diagrammatically represent a sample of the various images shown on the display means 10 when the signal coming from the control element 30 is varied in the range of values associated with an image transformation algorithm. In the embodiment shown, the algorithm provides a squeeze effect wherein the horizontal distances are decreased. Clearly, compression in the horizontal direction can be considered as a first algorithm and expansion in the horizontal direction as the second algorithm.
Advantageously, the images displayed corresponding to the zones neighboring the distinct operating ranges of algorithms, 2047 and 2048 for the first embodiment, are practically identical images so as not to generate image "jumps" when scanning the whole operating range of the control element.

In another embodiment, the computer determines which algorithm to apply. This decision is no longer based solely on the value of the signal coming from the control element. For example, the computer has an algorithm selection circuit which can operate automatically when the signal send by the control element is less than or more than a set threshold value. In one embodiment, the computer can be programmed to choose a transformation algorithm randomly. In another embodiment, the computer can be programmed to use the transformation algorithms successively in a preset order. In this operating mode, practically the entire operating range of the sensor can be used to manage the significance of the transformation used. Obviously, the various types of operation described above can also be combined.

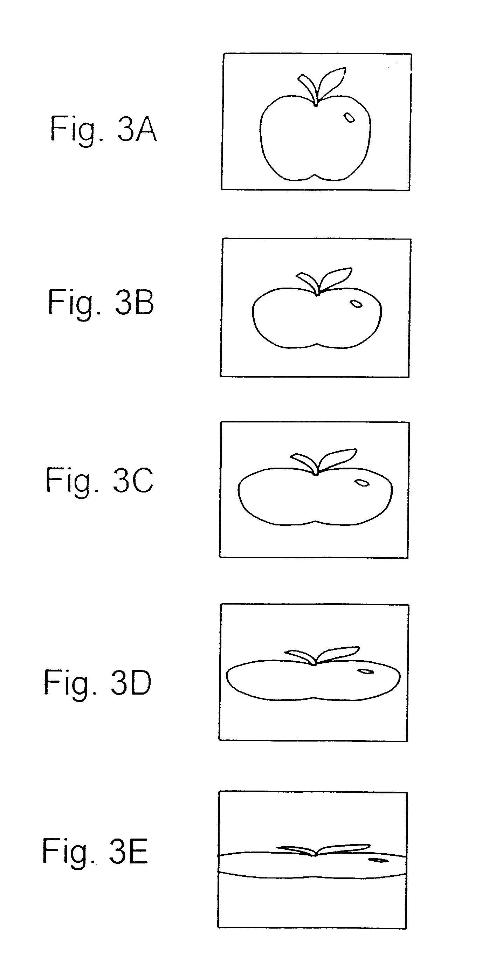

Operating modes have just been described, which use as control element a single sensor producing a continuous analog signal that is transformed into a digital signal having many possible discrete values so that the signal can be used by the computer. In general control elements have two sensors, one corresponding to a first variable that may be called "x", and the other to a second variable "y". Such control elements allow two different algorithms to be controlled independently. For example, as shown in Figures 3A to 3E, an expansion algorithm in the horizontal direction and a compression algorithm in the vertical direction. Clearly each sensor of the control element can be associated with two antagonistic algorithms as discussed concerning Figure 2. The sensors corresponding to the variables "x" and "y" for example, act on an expansion algorithm between values 2047 and 0 and on a compression algorithm for values between 2048 and 4095; the images displayed for the values 2047 or 2048 of each of the signals coming from the control element are practically the same and close to the undistorted image.

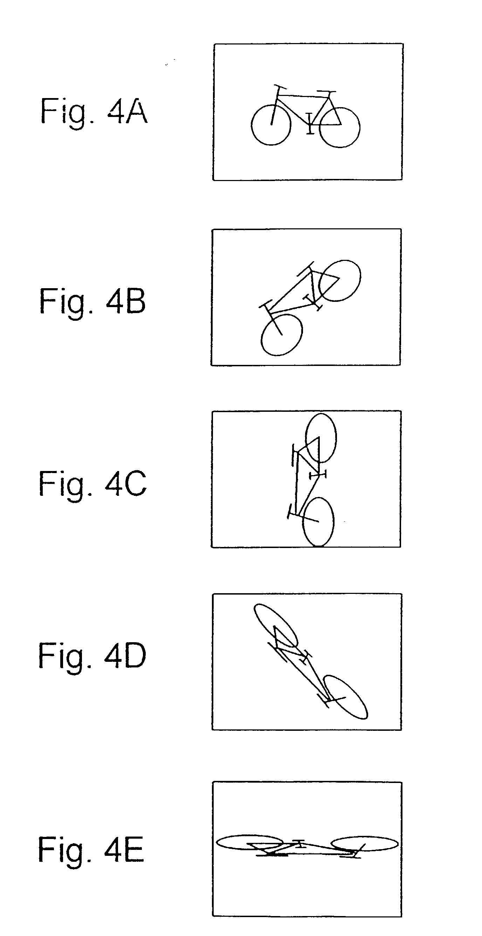

In another embodiment, the interactive interface described in the Patent Application FR9800871 mentioned above is used. Nevertheless, this interface is provided with three distinct sensors each supplying a digital control signal whose values are for example between 0 and 4095. A sample of the images displayed on the display means is shown in Figure 4. As may be noted, one of the sensors controls image compression in the vertical direction when the image is in its usual viewing orientation, another of the sensors controls horizontal expansion when the image is in its usual viewing orientation and the third sensor controls rotation. It is quite clear that the usual operation of the interactive interface will make complete uncoupling between the sensors practically impossible, however the possibility of simultaneously obtaining several not fully inter-correlated signals has an especially attractive advantage, particularly when it is associated with the intuitive operation provided by the interactive interface.

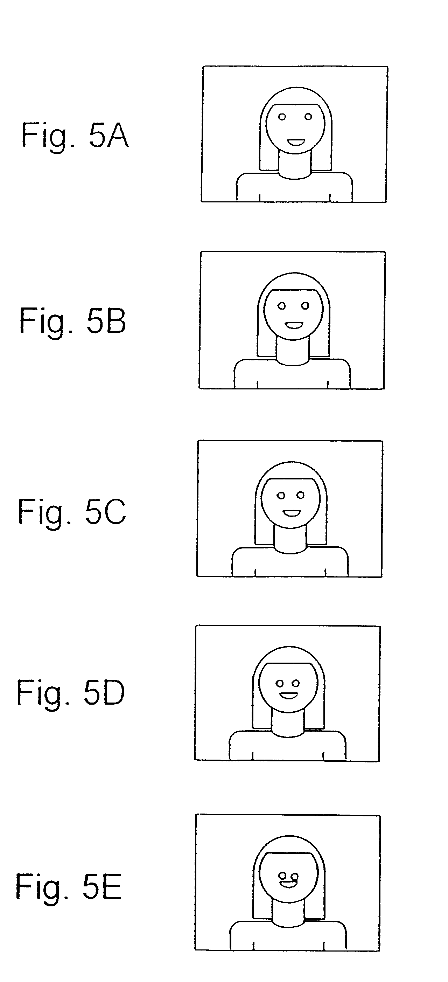

Figures 5A to 5E represent another embodiment wherein the transformation does not act on the whole image but only on one part of the image. A video mask, whether digital or not, can be made in real time with only that part of the image located inside the mask being modified. The various images represented in Figures 5A to 5E show a sampling of the succession of images displayed when using the process according to the invention wherein the silhouette of the character is not altered and the transformation acts on the dimension and position of the characteristics of the face, that is on the eyes, the nose and the mouth in the case described. Clearly in another embodiment, it can be arranged for the transformation only to act on a preset zone of the image, usually a central portion of the image.

Obviously image transformations do not have to be limited to compression or expansion distortions but can include barrel transformations, rotations or transformations pre-programmed by using lookup tables, which increase the modification possibilities. Obviously it can also be arranged to modify, in a similar way, the colors of the image or part of the image, the tint, the saturation, the brightness and even to use other complex functions such as solarisation, bas-relief effects, etc.

Obviously the interactive interface, also called control element, that is used can be any type whatever and have any number of sensors that can be inter-correlated or not, and the value of each of the correlation factors can be of any size. Advantageously, the correlation factors have the lowest possible values. Either the interface sensors can be sensors of different types or sensors of the same type in any number whatever of each type. Thus the control element output signal can be interpreted as a vector with n dimensions; n being equal to the number of sensors. In this case, the value of the control element output signal belongs to a space with n dimensions. Obviously each possible transformation can be controlled from one or more sensors according to the modifications wanted for the displayed image.

Advantageously, the computer 20 is linked to a printer 40 enabling the image displayed on the display means 10 to be copied onto a support, for example photographic paper, so as to obtain an image permanently distorted according to the user's wishes. The transfer of the distorted image can be obtained either automatically according to a preset frequency or by operating an appropriate push button or be started by voice or by any other means well known to those skilled in the art.

## Claims

1. A process of transformation of an electronic image wherein a computer a) displays a digital image on a display device, b) comprises digital image transformation algorithms and c) is linked to a control element that supplies a digital signal; and
characterized in that the variations of the digital value of the control element output signal are used to gradually transform at least a significant part of the image according to at least one algorithm set by these digital values.

2. A process according to Claim 1, wherein the digital value of the control element output signal belongs to a space with n dimensions.

3. A device for image transformation comprising:
an image display means (10);
a computer (20) supplied with several image transformation algorithms;
a control element (30) that enables digital signals to be supplied to the computer;
characterized in that it comprises:
a means that is sensitive to the digital signals supplied by the control element and, according to the digital value of the signal supplied and its variations, that gradually transforms at least a significant part of the image according to at least one algorithm determined by the digital values of the signal sent by the control element.

4. A device according to Claim 3 wherein the control element has several sensors whose signals are not fully inter-correlated.
